Europäisches Patentamt

European Patent Office

Office européen des brevets

(11) Publication number: **0 066 426 B1**

(12) **EUROPEAN PATENT SPECIFICATION**

(45) Date of publication of patent specification: **06.11.85**

(21) Application number: **82302592.9**

(22) Date of filing: **20.05.82**

(51) Int. Cl.⁴: **B 24 B 19/00, F 01 C 1/02, F 04 C 18/02, B 21 D 11/06**

(54) **Scroll manufacturing tool.**

(30) Priority: **20.05.81 JP 76138/81**

(43) Date of publication of application:
**08.12.82 Bulletin 82/49**

(45) Publication of the grant of the patent:
**06.11.85 Bulletin 85/45**

(84) Designated Contracting States:
**DE FR GB IT SE**

(56) References cited:
**EP-A-0 012 615**
**US-A- 801 182**
**US-A-3 994 635**

(73) Proprietor: **SANDEN CORPORATION**
**20 Kotobuki-cho**
**Isesaki-shi Gunma-ken (JP)**

(72) Inventor: **Fukushima, Eiji**
**1755, Haranogou Fujimi-mura**
**Seta-gun Gunma-ken (JP)**
Inventor: **Fukuhara, Seiichi**
**470, Namie-machi Takasaki-shi**
**Gunma-ken (JP)**
Inventor: **Hiraga, Masaharu**
**8-34, Honjo 4-chome Honjo-shi**
**Saitama-ken (JP)**

(74) Representative: **Pritchard, Colin Hubert et al**
**Mathys & Squire 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a scroll type fluid displacement apparatus and more particularly, to a tool for manufacturing the scroll.

Scroll type fluid displacement apparatus are well known in the prior art. For example, US—A—801,182 discloses a device including two scrolls, each having a circular end plate and a spiroidal or involute spiral element. Both scrolls are maintained angularly and radially offset so that both spiral elements interfit to make a plurality of line contacts between their spiral curved surfaces to thereby seal off and define at least one pair of fluid pockets. The relative orbital motion of the scrolls shifts the line contacts along the spiral curved surfaces to change the volume of the fluid pockets. The volume of the fluid pockets increases or decreases dependent on the direction of the orbital motion. Therefore, scroll type fluid displacement apparatus are applicable to compress, expand or pump fluids.

In such apparatus, each sealed off fluid pocket is defined by the line contacts between interfitting spiral elements and by the axial contacts between the axial end surface of each spiral element and the inner end surface of the end plate of the other scroll. The volume of the pocket is thereby defined by both line contacts and axial contacts.

The scroll is generally formed from a single piece of metal by machining process, such as milling. However, milling process consumes a great deal of time and energy and, also produces large quantities of waste metal. If the scroll member is formed by casting or forging, and if axial dimension of the spiral element is to be made relatively long to obtain a large volume or higher capacity, the draft angle of mold must be made large. After forming in such a mold, the amount of machining of the spiral element to obtain the uniform wall thickness increases with the result that relatively large quantities of waste metal are produced. Such a manufacturing method also consumes a great deal of time and energy and makes it difficult to attain high accuracy of the wall dimension of the spiral element.

In order to avoid these disadvantages, US—A—3,994,635 discloses a scroll consisting of two pieces. The scroll is formed of a separate end plate having an involutely configured groove in the one side surface thereof and a separate spiral element which is seated in the groove. However, in this construction, the process for seating the spiral element in the groove is intricate. Also, after seating the spiral element in the groove, finishing of surfaces of the end plate and the spiral element will be intricate and difficult. Furthermore, the reliability of the two-piece scroll is inferior to the single-piece scroll.

It is a primary object of this invention to provide an improvement in a manufacturing tool for finishing a preformed single-piece scroll which is used in a scroll type fluid displacement apparatus.

It is another object of this invention to provide a manufacturing tool for finishing an involute wrap surface of a single-piece scroll by coining to simplify the finishing process.

According to this invention, there is provided a manufacturing tool for finishing an involute surface of a preformed scroll to provide a finished scroll for use in a scroll type fluid displacement apparatus, characterized by a working member which includes an end plate and a first involute element extending from one side surface of said end plate, the end plate being formed with a plurality of penetrating holes which are arranged radially outwardly of the outer surface of said first involute element, a second involute element which can be interfitted with said first involute element to leave a radial gap therebetween, a plurality of pins projecting from an axial end surface of said second involute element facing said end plate for loosely fitting into said holes of said end plate, and a rotating member which can be rotatably mounted on the other side surface of said end plate and engaged with the axial end of said pins so as to prevent relative rotation between said rotating member and said second involute element, whereby, in use, the width of the gap between said first and second involute elements is reduced by rotating said rotating member and said working member in opposite directions to finish both side surfaces of a spiral element of a preformed scroll disposed in the radial gap.

Suitably, the working member includes a drive member affixed to the other side surface of the end plate, and the rotating member is rotatably fitted to said drive member.

According to an embodiment of this invention, the drive member is a drive shaft extending on the central axis of the first involute element, and the rotating member is rotatably mounted on the drive shaft. Suitably, each of the holes has an arcuate form and extends about the central axis of the first involute element.

This invention will now be described, by way of example, with reference to the accompanying drawings, in which:

Fig. 1 is a perspective view of a scroll for use in a scroll type fluid displacement apparatus;

Fig. 2 is a view for illustrating an involute of a circle;

Fig. 3 is a view for illustrating two involutes forming the outer and inner curved surfaces of the involute wrap of a scroll;

Fig. 4 is a view for illustrating the pitch of an involute;

Fig. 5 is an exploded perspective view of a manufacturing tool of an embodiment according to the present invention;

Fig. 6 is an exploded perspective view of the manufacturing tool as viewed from opposite side of Fig. 5;

Fig. 7 is a sectional view of the manufacturing tool under a condition used for finishing a preformed scroll; and

Fig. 8 is a sectional view of another embodiment similar to Fig. 7.

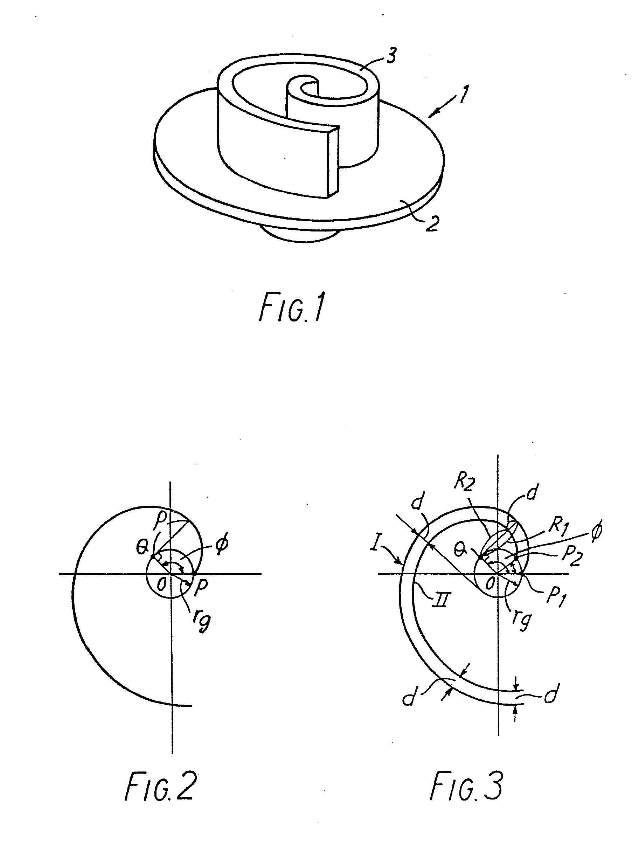

Before the embodiment of this invention is described, a basic design of a scroll for use in a scroll type fluid displacement apparatus is described in connection with Figs. 1—4.

Referring to Fig. 1, a scroll 1 includes a circular end plate 2 and a wrap or involute spiral element 3 affixed to and extending from one side surface of end plate. A scroll type fluid displacement apparatus includes a pair of such scrolls, both of which are maintained angularly and radially offset so that they interfit and form a plurality of line contacts and axial contact to define at least one pair of sealed off fluid pockets.

The spiral contour of spiral element 3 is generally an involute of a circle. That is, the spiral contour of a side wall of spiral element 3 consists of a locus which is drawn by an end of an inextensible string from a point P on the involute generating circle at a time when the inextensible string wound on the involute generating circle is unwound. The radius of curvature of the involute, i.e., the length $\rho$ along a tangent line at a point $Q$ on the involute generating circle to the involute, is given by $\rho = \phi \cdot rg$, where $\phi$ is an involute angle and rg is a radius of the involute generating circle. Referring to Fig. 3, the outer and inner spiral contours of spiral element 3 are two similar involutes I and II, involute I starting from a point $P_1$ on the involute generating circle while involute II starting from a point $P_2$ on the involute generating circle which is angularly offset by $\beta$ from point $P_1$. Since, a length $R_1$ along a tangent line at a point $Q$ on the involute generating circle to involute I is given by $R_1 = \phi \cdot rg$ and a length $R_2$ along the tangent line from the point $Q$ to involute II is given by $R_2 = (\phi - \beta) \cdot rg$. The thickness of the spiral element or the distance d between the both involutes I and II is, therefore, given by

$$d = R_1 - R_2 = \phi \cdot rg - (\phi - \beta) \cdot rg = \beta \cdot rg.$$

This equation also teaches a nature of two involutes I and II obtained from an involute generating circle that the distance between both involutes I and II is adjustable by changing the offset angle $\beta$ of starting points $P_1$ and $P_2$ of two involutes I and II, the adjusted distance being uniform in no relation to the involute angle.

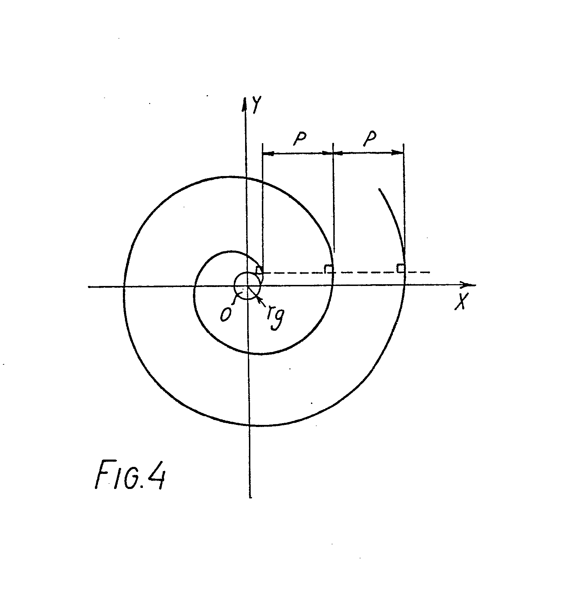

Fig. 4 illustrates another nature of the involute, that is, individual distances between adjacent intersections of the involute and a tangent line of the involute generating circle are equal to one another. Therefore, the involute has a constant pitch P which is defined by $P = 2\pi \cdot rg$.

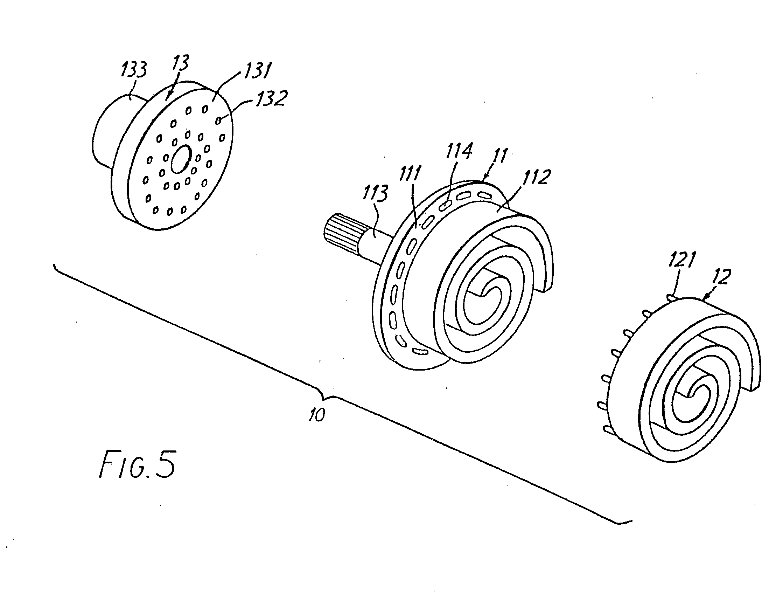

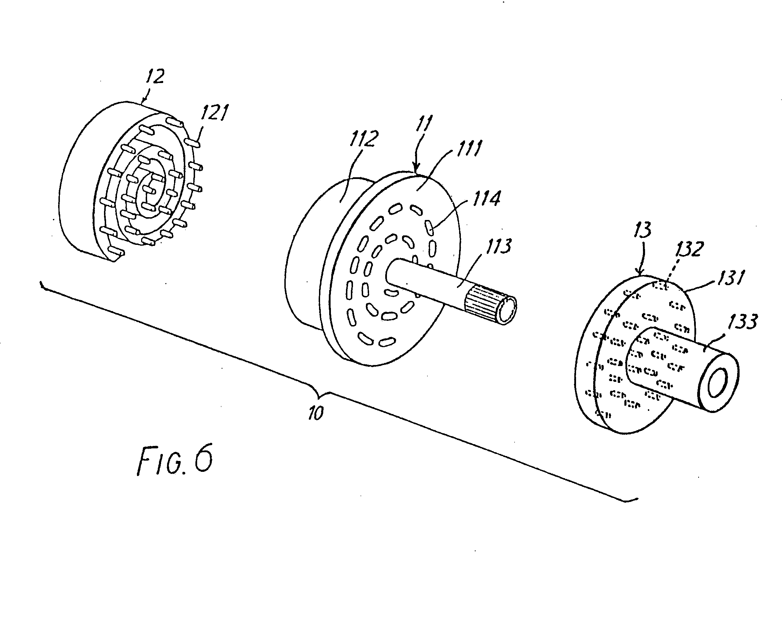

Referring to Figs. 5, 6 and 7, a manufacturing tool 10 to form a scroll in accordance with the present invention includes a working member 11 having a first involute element 112, a second involute element 12 to be interfitted with first involute element 112 and having a plurality of pins 121 projecting from an axial end surface thereof, and a rotating plate 13.

Working member 11 includes an end plate 111, first involute element 112 affixed to and extending from one side surface of end plate 111, and a drive shaft 113 extending on the central axis of involute element 112 and from the other side surface of end plate 111 opposite involute element 112. End plate 111 is formed with a plurality of penetrated arcuate holes 114 which are arranged along the outer side wall portion of first involute element 112 so that pins 121 of second involute element 12 may be fitted through holes 114 at a time when first and second involute elements 112 and 12 are made to interfit. The outer and inner side walls of each arcuate hole 114 are concentric with one another and have a center on the central axis of first involute element 112. The length of the arc of each arcuate hole 114 is selected to limit relative rotation of working element 11 and second involute element 12 mounted therein within a predetermined small angular extent by engagement of each pin 121 and each arcuate hole 114. Rotating plate 13 includes a circular plate 131 having a central hole for receiving shaft 113 of working member 11. Circular plate 131 is also formed with a plurality of holes 132 in its one side surface for receiving the axial end portion of pins 121 of second involute element 12. Rotating plate 13 also has a tubular shaft 133. Tubular shaft 133 is affixed to the central portion of the other side surface of end plate 131 so that the central hole of end plate 131 connects with the axial penetrating hole of tubular shaft 133 for supporting drive shaft 113 of working member 11. When rotating plate 13 is mounted on drive shaft 113 by inserting drive shaft 113 through the central hole of end plate 131 and the penetrating hole of tubular shaft 133, the center of tubular shaft 133 coincides with the center of drive shaft 113 of working member 11, and axial ends of pins 121 projecting through arcuate holes 114 are fitted into holes 132 of rotating plate 13. Pins 121 must not be fixedly connected to rotating plate 13, but may be fixedly connected to it.

The spiral curve of second involute element 12 is formed similar to that of first involute element 112, so that both involute elements 112 and 12 can be interfitted with a radial gap therebetween which is defined between the facing side walls of involute elements. It will be noted from the natures of the involute as described above that the width of the gap does not change but is constant along involute elements 112 and 12. In addition, the width can be adjusted by relative rotation of both involute elements 112 and 12, as will be noted from teaching of the above-described equation $d = \beta \cdot rg$.

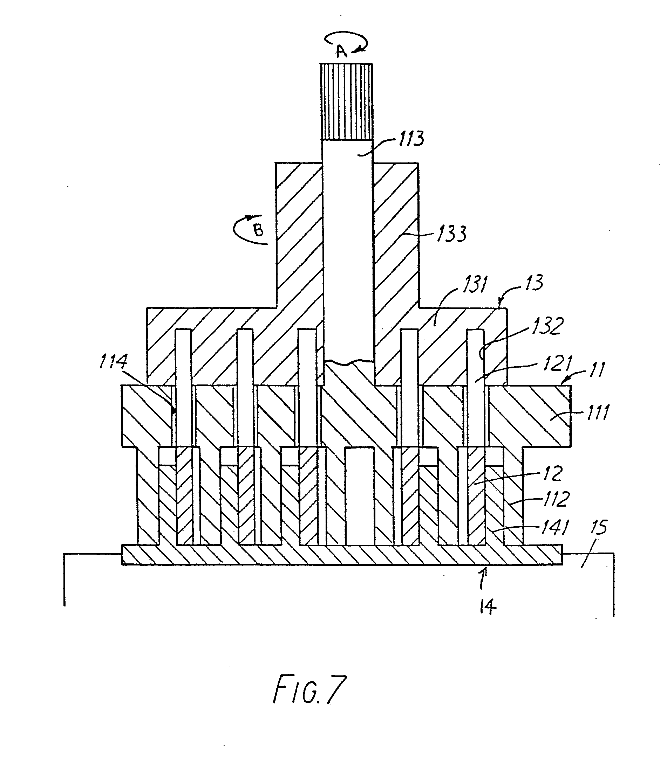

When the tool is assembled, as shown in Fig. 7, by mounting second involute 12 and rotating plate 13 onto working member 11, each pin 121 of second involute element 12 passes through each corresponding arcuate hole 114 of end plate 111 and is fitted in hole 132 of rotating plate 13, as described above. Therefore, second involute element 12 can be moved along each arcuate hole 114 by rotation of rotating plate 13, so that the gap width between both involute elements 112 and 12 can be adjusted by rotation of rotating plate 13. However, the angular extent of rotation of second involute element 12 is limited by arcuate holes 114, since each pin 121 of second involute element 12 is penetrating each arcuate hole 114. As will be noted, the gap width can be also adjustable by rotation of working member 11 but within an angular extent limited by arcuate holes 114. Both working member 11 and second involute element 12 may be rotated but in opposite directions.

The finishing or coining operation of a preformed scroll by using the tool 10 will be explained below, referring to Fig. 7. If rotating plate 13 is fixedly connected to the axial ends of pins 121, the assembled tool 10 is set on a support (not shown) by, for example, supporting drive shaft 113 so that axial end surfaces of involute elements 112 and 12 face, but spaced from, a working table 15.

A preformed scroll 14, which is formed by, such as a molding or a casting method, precisely and closely to the desired final dimensions and is subjected to finishing, is fixedly disposed on working table 15 so that the axial end of an involute wrap or spiral element 141 of preformed scroll 14 is placed near, and in registry with, the radial gap between the inner side wall of first involute element 112 and the outer side wall of second involute element 12. After disposing preformed scroll 14, working table 15 and/or the supporting member of tool 10 is axially moved to introduce spiral element 141 into the radial gap between involute elements 112 and 12.

If axial ends of pins 121 can be readily removed from holes 132 of rotating plate 13, the tool 10 is assembled on preformed scroll 14 set on working table 15. That is, after setting scroll 14 onto working table 15, second involute element 12, working member 11 and rotating plate 13 are superposed onto scroll in this order to assemble the tool 10 as shown in Fig. 7.

In a condition that spiral element 141 of scroll 14 is disposed in the radial gap of tool 10, rotating plate 13 is rotated toward the clockwise direction (direction is shown by arrow A in Fig. 7) by a suitable rotating power source (not shown) through tubular shaft 133. Second involute element 13 also rotates together with rotating plate 13, because they are connected by pins 121. At the same time when second involute element 12 is rotated, working member 11 is also rotated but in the anticlockwise direction by rotating drive shaft 113 in the direction as shown by arrow B in Fig. 7 by a suitable rotating power source (not shown). First involute element 112 is thus rotated by rotation of working member 11. In this time, the rotation angle of both involute elements are limited by pins 121 of second involute element 12 penetrating arcuate holes 114 of working member 11. Therefore, the gap width between the inner side wall of first involute element 112 and the outer side surface of second involute element 12 is reduced to a predetermined distance by the relative rotation of working member 11 and second involute element 12. The spiral element 141 of preformed scroll 14 within the radial gap is pressed, coined or rolled by both involute elements 112 and 12 due to the reduction of gap. Thereby, the both side surfaces of spiral element 141 are finished so that the spiral element 114 has a smooth surface and an accurate dimension.

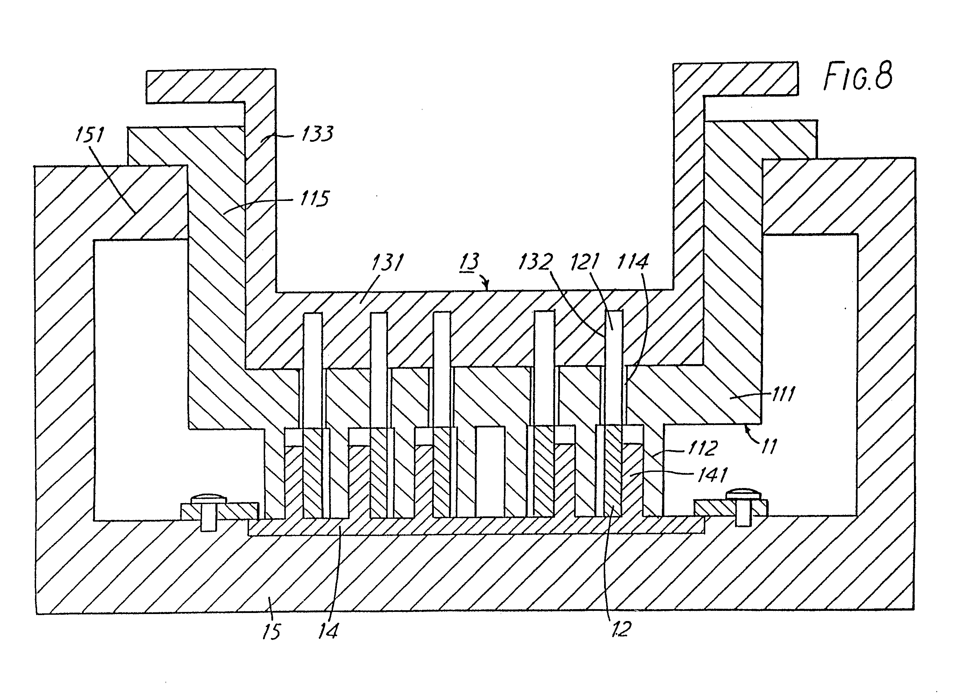

Referring to Fig. 8, another embodiment shown is similar to the above-described embodiment except for a point that the drive shaft and the tubular shaft are replaced by annular arm portions 115 and 133.

End plate 111 of working member 11 has annular arm portion 115 axially projecting from the outer peripheral surface thereof. Rotating plate 13 has annular arm portion 133 axially projecting from the outer peripheral surface of circular end plate 131. Arm portion 133 is rotatably fitted in the interior of arm portion 115 of working member 11. Arm portion 115 of working member 11 is rotatably supported by a supporting portion 151 of working table 15.

When arm portions 115 and 133 are rotated in opposite directions, the radial gap between interfitting involute elements 112 and 12 is reduced so that the side walls of spiral element 141 disposed in the radial gap are finished by pressing, coining or rolling operation of involute elements 112 and 12. Thus, a finished scroll of an accurate dimension is obtained.

**Claims**

1. A manufacturing tool for finishing an involute surface of a preformed scroll to provide a finished scroll for use in a scroll type fluid displacement apparatus, characterized by a working member (11) which includes an end plate (111) and a first involute element (112) extending from one side surface of said end plate, the end plate (111) being formed with a plurality of penetrating holes (114) which are arranged radially outwardly of the outer surface of said first involute element (112), a second involute element (12) which can be interfitted with said first involute element (112) to leave a radial gap therebetween, a plurality of pins (121) projecting from an axial end surface of said second involute element (12) facing said end plate (111) for loosely fitting into said holes (114) of said end plate (111), and a rotating member (13) which can be rotatably mounted on the other side surface of said end plate (111) and engaged with the axial end of said pins (121) so as to prevent relative rotation between said rotating member (13) and said second involute element (12), whereby, in use, the width of the gap between said first and second involute elements (112, 12) is reduced by rotating said rotating member (13) and said working member (11) in opposite directions to finish both side surfaces of a spiral element (141) of a preformed scroll disposed in the radial gap.

2. A manufacturing tool as claimed in Claim 1, wherein said working member (11) includes a drive member (113) affixed to the other side surface of said end plate (111), and said rotating member (13) is rotatably fitted to said drive member (113).

3. A manufacturing tool as claimed in Claim 1, wherein each of said holes (114) has an arcuate form and extends about the central axis of said first involute element (112).

4. A manufacturing tool as claimed in Claim 2, wherein said drive member is a drive shaft (113) extending on the central axis of said first involute element (112), and said rotating member (13) is rotatably mounted on said drive shaft (113).

**Patentansprüche**

1. Fabrikationswerkzeug zur Fertigstellung der Evolventenfläche einer vorgeformten Spirale, um eine fertiggestellte Spirale zur Verwendung in einer Spiralfluidverdrängervorrichtung vorzusehen, gekennzeichnet durch ein Werkstück (11) mit einer Endplatte (111) und einem ersten Evolventenelement (112), das aus der einen Seite der Oberfläche der Endplatte herausragt, wobei die Endplatte (111) mit einer Mehrzahl von Durchgangslöchern (114), die radial zur äußeren Oberfläche des ersten Evolventenelements (112) hin angeordnet sind, gebildet ist, ein zweites Evolventenelement (12), das in das erste Evolventenelement (112) so eingepaßt werden kann, daß ein radialer Zwischenraum zwischen beiden bleibt, eine Mehrzahl von Dornen (121), die aus einer axialen Endfläche des zweiten Evolventenelementes gegenüber der Endplatte (111) herausragen, um lose in die Bohrungen (114) der Endplatte (111) eingepaßt zu sein, und ein sich drehendes Teil (13), des drehbar auf der anderen Seitenoberfläche der Endplatte (111) befestigt ist, und mit den axialen Enden der Dorne (121) so in Eingriff steht, daß eine relative Drehung zwischen dem sich drehenden Teil (13) und dem zweiten Evolventenelement (12) verhindert wird, wodurch im Gebrauch die Weite des Zwischenraums zwischen dem ersten und zweiten Evolventenelement (112, 12) durch Rotation des sich drehenden Teils (13) und des Werkstücks (11) in entgegengesetzte Richtungen reduziert wird, um beide Seitenoberflächen eines Spiralelements (141) einer vorgeformten Spirale, die in dem radialen Zwischenraum angeordnet ist, fertigzustellen.

2. Fabrikationswerkzeug nach Anspruch 1, dadurch gekennzeichnet, daß das Werkstück (11) eine Antriebseinrichtung (113), die an der anderen Seitenoberfläche der Endplatte (111) befestigt ist, aufweist, und das sich drehende Teil (13) drehbar in die Antriebseinrichtung (113) eingepaßt ist.

3. Fabrikationswerkzeug nach Anspruch 1, dadurch gekennzeichnet, daß die Bohrungen (114) präzise gebildet sind und sich um die Mittelachse des ersten Evolventenelementes (112) herum erstrecken.

4. Fabrikationswerkzeug nach Anspruch 2, dadurch gekennzeichnet, daß die Antriebseinrichtung eine Antriebswelle (113) ist, die sich entlang der Mittelachse des ersten Evolventenelementes (112) erstreckt, und das sich drehende Teile (13) drehbar an der Antriebswelle (113) befestigt ist.

**Revendications**

1. Outil de fabrication destiné au traitement de finition d'une surface en spirale d'une volute préformée, pour obtenir une volute terminée destinée à être utilisée dans un appareil de déplacement de fluide de type à volute, outil caractérisé en ce qu'il comprend un élément de travail (11) comprenant une plaque d'extrémité (111) et un premier élément de spirale (112) partant d'une face latérale de cette plaque d'extrémité, la plaque d'extrémité (111) étant percée d'un certain nombre de trous (114) disposés radialement vers l'extérieur de la surface extérieure du premier élément de spirale (112), un second élément de spirale (12) pouvant s'emboîter dans le premier élément de spirale (112) de manière à laisser un certain intervalle radial entre ces éléments, un certain nombre de tiges (121) faisant saillie sur une face d'extrémité axiale du second élément de spirale (12) venant en face de la plaque d'extrémité (111), de manière à venir se loger avec jeu dans les trous (114) de la plaque d'extrémité (111), et un élément rotatif (13) pouvant être monté en rotation sur l'autre face latérale de la plaque d'extrémité (111) et pouvant recevoir les extrémités axiales des tiges (121) de manière à empêcher la rotation relative entre l'élément rotatif (13) et le second élément de spirale (12), ce qui permet ainsi, en cours d'utilisation, de réduire la largeur de l'intervalle entre les premier et second élément de spirale (112, 12) en faisant tourner en sens inverse l'élément rotatif (13) et l'élément de travail (11) pour effectuer un traitement de finition des deux surfaces latérales d'un élément de spirale (141) de la volute préformée placée dans l'intervalle radial.

2. Outil de fabrication selon la revendication 1, caractérisé en ce que l'élément de travail (11) comprend un élément d'entraînement (113) fixé à l'autre face latérale de la plaque d'extrémité (111), et en ce que l'élément rotatif (13) s'adapte en rotation sur l'élément d'entraînement (113).

3. Outil de fabrication selon la revendication 1, caractérisé en ce que chacun des trous (114) présente une forme courbe s'étendant autour de l'axe central du premier élément de spirale (112).

4. Outil de fabrication selon la revendication 2, caractérisé en ce que l'élément d'entraînement est un arbre d'entraînement (113) monté sur l'axe central du premier élément de spirale (112), et en ce que l'élément rotatif (13) est monté en rotation sur cet arbre d'entraînement (113).

FIG.1

FIG.2

FIG.3

FIG.4

FIG.5

FIG. 6

FIG.7

FIG.8

151 133 115 131 13 132 121 114 111 112 141 11 15 14 12

0 066 426